Europäisches Patentamt

European Patent Office

Office européen des brevets

(19)

(11) Veröffentlichungsnummer : **0 064 175**
**B1**

# (12) EUROPÄISCHE PATENTSCHRIFT

(45) Veröffentlichungstag der Patentschrift :
28.11.84

(21) Anmeldenummer : 82103087.1

(22) Anmeldetag : 10.04.82

(51) Int. Cl.³ : **A 01 K 31/00**

(54) **Stall für Legehennen.**

(30) Priorität : 30.04.81 CH 2837/81

(43) Veröffentlichungstag der Anmeldung :
10.11.82 Patentblatt 82/45

(45) Bekanntmachung des Hinweises auf die Patenterteilung : 28.11.84 Patentblatt 84/48

(84) Benannte Vertragsstaaten :
AT DE NL

(56) Entgegenhaltungen :
CH-A- 109 080
GB-A- 661 258
US-A- 3 439 651
US-E- 25 714

(73) Patentinhaber : **Verband ostschweizerischer landwirtschaftlicher Genossenschaften (VOLG)**
**Schaffhauserstrasse 6**
**CH-8401 Winterthur (CH)**

**Globogal AG**
**Im Tannlihag 938**
**CH-5600 Lenzburg (CH)**

(72) Erfinder : **Langenegger, Christian**
**Stegenstrasse**
**CH-8547 Gachnang (CH)**
Erfinder : **Hardmeier, Karl**
**Aehrenweg 5**
**CH-5430 Wettingen (CH)**
Erfinder : **Schinkopf, Peter**
**Kirchtal 481**
**CH-5703 Seon (CH)**

(74) Vertreter : **Meyer, Reinhard, Dipl.-Ing.**
**c/o Dr. A. R. Egli & Co. Patentanwälte Horneggstrasse 4**
**CH-8008 Zürich (CH)**

EP 0 064 175 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Stall für Legehennen, mit einem Scharrboden, einem Legenest für die Ablage der Eier, mit wenigstens einem Futterband und wenigstens einer Tränke, mit Sitzstangen und mit wenigstens einer Kotgrube.

In den letzten Jahren sind in grossem Ausmass sogenannte Legebatterien aufgekommen, in welchen die Legehennen sich in engen Käfigen befinden und überhaupt keine Bewegungsfreiheit haben. Die gegen diese Legebatterien erhobene Kritik, namentlich von Tierschutzvereinen, hat verschiedenenorts bereits zu einer neuen Gesetzgebung über den Tierschutz geführt, welche das Verbot der Neuerrichtung solcher Batterien und dem Ersatz der alten innerhalb eines bestimmten Zeitraumes festlegt.

Die Erfindung sieht daher einen Stall für Legehennen vor, der einerseits den Erfordernissen der neuen Tierschutzgesetzgebung entspricht und andererseits dennoch eine rationelle Bewirtschaftung erlaubt, indem diejenigen Nachteile vermieden werden, die den bisher bekannten Legehennenställen anhaften.

Zum besseren Verständnis dieser Nachteile bwz. der mit der Erfindung anzustrebenden Vorteile soll kurz auf die Besonderheiten der Haltung von Legehennen sowie auf die Konstruktion der bisherigen Ställe und auch der Legebatterien eingegangen werden. Legehennen benötigen einen Platz, auf welchem sie scharren können, den Scharrboden, der gelegentlich auch als Scharraum bezeichnet wird. Bei diesem muss in Betracht gezogen werden, dass der Stall belüftet werden muss; der Scharrboden sollte also nicht dort angeordnet werden, wo die Luft durch den Stall hindurchzieht und es an jener Stelle demzufolge am kältesten ist. Im weiteren benötigen die Tiere einen Platz zur Eierablage, das sogenannte Legenest, sowie einen Futtertrog oder ein Futterband und ferner wenigstens eine Tränke. Beim Legenest ist darauf zu achten, dass die Tiere für die Eierablage stets den dunkelsten Ort aufsuchen, der ihnen zur Verfügung steht. Bei normalen Ställen kann dies beispielsweise eine Ecke des Stalles sein, die möglichst weit vom Fenster oder gegebenenfalls vom Eingang entfernt ist. Für eine rationelle Bewirtschaftung wäre es aber andererseits wünschenswert, wenn dieses Legenest entweder gut zugänglich ist oder wenn auf irgendeine Weise für einen Abtransport der gelegten Eier gesorgt werden kann. Die häufig anzutreffenden schiefen Ebenen sollten dabei vermieden werden ; sie bestehen aus Drahtgitter, welches durch die Bewegung der Hühner erschüttert wird, sodass die in den dunklen und daher auch schlecht zugänglichen Legenestern abgelegten Eier durch diese Erschütterungen unter Wirkung der Schwerkraft gegen den Bedienungsgang hin rollen, wo sie leicht eingesammelt werden können. Die Erfahrung hart allerdings gezeigt, dass hierbei mit einem gewissen Prozentsatz von zerbrochenen Eiern zu rechnen ist, was natürlich auf die Rendite einen Einfluss hat. Ausserdem hat es sich gezeigt, dass diese schiefen Ebenen nur unnötigen Platz beanspruchen, weil die Hühner auf ihnen nicht stehen können und daher andere Stellen bevorzugen.

Die hier skizzierten Nachteile und Gegebenheiten der bisher bekannten Ställe sollen vermieden werden ; der zu diesem Zweck vorgeschlagene Stall zeichnet sich erfindungsgemäss durch die Merkmale des Anspruches 1 aus.

Ein Ausführungsbeispiel dieses Stalles wird anhand der beiliegenden Zeichnungen erläutert ; es zeigen :

Figur 1 einen Querschnitt durch den Stall, und

Figur 2 eine Schnittansicht von oben längs der Linie II-II in Fig. 1.

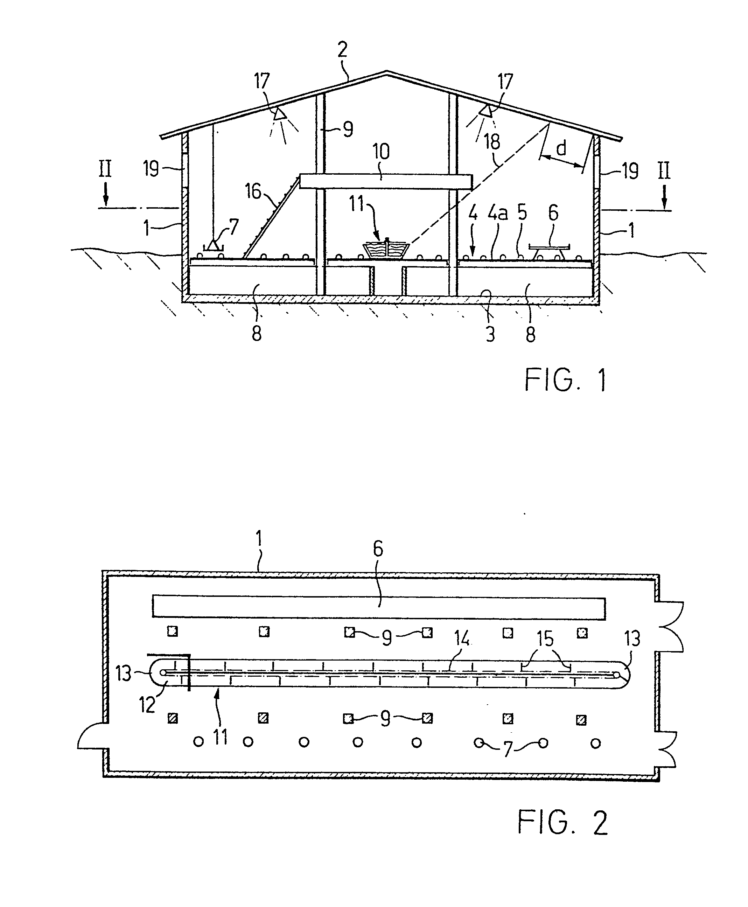

Figur 1 zeigt den Stall im Querschnitt. Er weist Wände 1 und ein Dach 2 auf. Über die ganze Breite des Stalles ist in einem gewissen Abstand vom eigentlichen Gebäudeboden 3 ein horizontaler Boden 4 angeordnet. Dieser Boden 4 besteht durchwegs aus einem Drahtgitter 4a. Dieses ist in wegnehmbaren Abschnitten angeordnet. Unmittelbar über diesen Drahtgitter 4a sind die üblichen Stizstangen 5 vorgesehen. Sie sind in Fig. 1 zwecks besserer Darstellung übertrieben gross und ausserdem so eingezeichnet, dass sie von einer Querwand zur andern verlaufen ; sie können sich aber ebensogut von der einen Längswand 1 zur andern erstrecken. Ihre Abstände und ihr Durchmesser sind derart gewählt, dass sie gesamthaft einen für das Stallpersonal begehbaren Rost bilden, sie sind also näher beieinander als eingezeichnet.

An geeigneter Stelle sind wenigstens ein Futtertrog oder ein Futterband 6 und verschiedene Tränken 7 angeordnet.

Der das obere Stockwerk bildende Scharrboden 10 besteht, im Gegensatz zum Gitter 4a des Bodens 4 im unteren Stockwerk, aus einer festen Platte, üblicherweise aus einer Holzfaserplatte, auf welcher die Streue aufgebracht ist. Der Scharrboden ist also lichtundurchlässig und dies führt zu einem weiteren Vorteil. Wie aus Fig. 1 ersichtlich, ist unter ihm auf dem Boden 4 das Legenest 11 angebracht. Es wurde schon erwähnt, dass Legehennen zur Eierablage stets die dunkelste Stelle aufsuchen, die sie finden können. Der Scharrboden 10 schafft nun gerade diese dunkle Stelle, und das Legenest 11 kann somit in zentraler Lage des Stalles angeordnet werden, wo es von den Tieren gut erreicht werden kann. Damit werden diese veranlasst, ihre Eier auch wirklich im Legenest abzulegen und nicht an irgendeinem anderen Ort. Das sogenannte Verlegen der Eier, wie dies bei konventionellen Ställen oft der Fall ist weil sich dort das Legenest nicht immer an der dunkelsten Stelle befindet, dürfte somit hier wegfallen. In jenen Stellen muss meistnoch ausserhalb des Legenestes nach Eiern gesucht werden, und trotz der Suche gehen einzelne Eier, die nicht entdeckt werden, verloren, was den Ertrag herabsetzt.

Das hier zur Verwendung gelangende Legenest (das nicht Gegenstand dieser Erfindung bildet) kann von einer der bekanntgewordenen Ausführungen sein. Wesentlich ist, dass es eine Einrichtung aufweist, welche die Eier zu einem Ort 12 befördert, an welchem sie leicht eingesammelt werden können. Dadurch braucht man die Eier nicht dort einzusammeln, wo sie von den Hennen abgelegt werden, und das wiederum hat den Vorteil, dass der Scharrboden 10, der sich nicht über das ganze Legenest hinweg erstreckt, relativ tief über demselben bzw. über dem unteren Stockwerk angeordnet werden kann. In seiner üblichen Ausführungsform, wie in Fig. 2 dargestellt, ist das Legenest, das ein- oder zweistöckig ausgeführt sein kann, eine Art endloser Trog, der aus zwei parallelen, nebeneinander liegenden Strängen besteht, welche an ihren Enden durch halbkreisförmige Trogstücke 13 miteinander verbunden sind. Der genannte Trog ist mit weichem Material, der sogenannten Einstreue gefüllt. Die Eiertransporteinrichtung besteht im wesentlichen aus einer umlaufenden Endloskette 14, von welcher Stäbe 15 horizontal unter 90° zur Kettenachse abstehen und eine Länge aufweisen, die im wesentlichen der Trogbreite entspricht. Diese Stäbe 15 erfassen die gelegten Eier und rollen sie langsam auf der weichen Einstreue vor sich her bis zur Stelle 12. Die Anlage wird nur während kurzer Zeit betrieben. Da die Hennen ihre Eier meist innerhalb derselben Zeitspanne im Verlaufe des Tages legen und dann das Legenest 11 wieder verlassen, wird die Anlage anschliessend daran in Betrieb gesetzt, was üblicherweise zweimal pro Tag der Fall ist.

Der Scharrboden 10 im oberen Stockwerk kann von den Tieren, die sich gerade im unteren Stockwerk befinden, beispielsweise über eine Leiter 16 (Fig. 1) oder sonst eine geeignete Einrichtung, z. B. eine volierenartigen Treppe erreicht werden.

Wie schon erwähnt, bleibt der Teil des unteren Stockwerkes, in welchem sich das Legenest 11 befindet, dunkel, mindestens soll jede direkte Beleuchtung vom Legenest ferngehalten werden. Damit ist auch die Lage der zur künstlichen Beleuchtung des Stalles notwendigen Lichtquellen 17 gegeben. Gemäss Fig. 1 sind zwei Reihen von Beleuchtungskörpern am Dach 2 vorgesehen, und jede Reihe darf aufgrund des soeben Gesagten nur in einem gewissen Mindestabstand d von der benachbarten Stallwand entfernt liegen. Das Mindestmass dieses Abstandes ist derart, dass das Legenest 11 gerade noch im Schatten des Scharrbodens bleibt.

Dies ist in Fig. 1 durch die gestrichelte Linie 18 dargestellt, deren Verlängerung bis zum Dach 2 den erwähnten Abstand d bestimmt.

Dieselben Überlegungen gelten auch für den Fall, dass das Dach mit Oberlichtern versehen wird ; auch diese Oberlichter müssen, wenigstens was ihr äusserer Rand betrifft, in analoger Weise angeordnet sein. Wo keine Oberlichter vorhanden sind, wird der Stall tagsüber allein durch die Fenster 19 erhellt. Zur Dämpfung des eintretenden Tageslichtes wird das Dach 2 über die Seitenwände 1 hinausgezogen, wie aus Fig. 1 ersichtlich.

Schon aus diesen Merkmalen ergibt sich bereits ein erster Vorteil. Dadurch, dass der Boden 4 aus Drahtgitter besteht, kann zwischen ihm und dem Gebäudeboden 3 eine hier zweiteilige Kotgrube 8 angeordnet werden. Nicht nur der Kot der auf den Sitzstangen sitzenden Hennen, sondern auch das von ihnen rings um das Futterband 6 herum verschüttete Futter und das aus den Tränken 7 heraus verspritzte Wasser gelangen praktisch unbehindert durch die Gittermaschen in die Kotgrube 8, sodass der Boden 4 relativ sauber bleibt und auf alle Fälle rasch und ohne grossen Aufwand gereinigt werden kann.

Das Dach 2 wird entlang seiner Längsachse von zwei Reihen von Dachstützen 9 getragen, welche durch den Boden 4 hindurch bis auf den Gebäudeboden 3 reichen. Ihre Anordnung ist derart gewählt, dass zwischen ihnen ein weiteres Stockwerk eingeschoben werden kann, das durch einen Scharrboden 10 gebildet wird. Dieser liegt auf etwa einem Drittelhöhe zwischen dem Boden 4 und dem First des Daches 2. Die Stützen 8 tragen also nicht nur das Dach, sondern gleichzeitig auch den Scharrboden 10. Damit kommt dieser unter den Dachfirst zu liegen und befindet sich somit dort, wo sich die entlang den beiden Dachhälften aufsteigende Warmluft sammelt, also am praktisch wärmsten Ort ; gleichzeitig ist er ausserhalb der durch den Stall hindurchstreichenden Zugluft. Ein weiterer Vorteil dieser erhöhten Anordnung liegt darin, dass sich wegen der sehr geringen Temperaturunterschiede über und unter dem Scharrboden 10 kein Kondenswasser in der Streue desselben bildet. Dies ist bei Scharrböden, die direkt auf dem Stallboden aufliegen, jedoch üblicherweise der Fall, weil dort die Temperaturdifferenz zwischen dem kühlen Boden und der warmfeuchten Luft über dem Scharrboden erheblich grösser ist.

**Ansprüche**

1. Stall für Legehennen, mit einem Scharrboden (10), einem Legenest (11) für die Ablage der Eier, mit wenigstens einem Futterband (6) und wenigstens einer Tränke (7), mit Sitzstangen (5) und mit wenigstens einer Kotgrube (8), dadurch gekennzeichnet, dass der Stall über einen Teil seiner Grundfläche zweistöckig ausgeführt ist, wobei das obere Stockwerk durch den Scharrboden (10) gebildet ist, während das untere Stockwerk einen Boden (4) aufweist, der gesamthaft von einem horizontal angeordneten Gitter (4a) gebildet ist, welches die darunter befindliche Kotgrube (8) überdeckt, dass sich das Futterband (6), die Tränke (7) und das Legenest (11) unmittelbar über diesem Gitter befinden und das Legenest zudem unter dem Scharrboden in zentraler Lage zu diesem befindet.

2. Stall nach Anspruch 1, dadurch gekennzeichnet, dass zwischen dem Scharrboden (10) und dem unteren Stockwerk eine von den Legehennen begehbare Verbindungseinrichtung (16) besteht.

3. Stall nach Anspruch 1, dadurch gekennzeichnet, dass die Sitzstangen (5) unmittelbar über dem die Kotgrube (8) abdeckenden Gitter (4a) angeordnet sind und voneinander einen solchen Abstand aufweisen, dass sie für das den Stall betreuende Personal einen begehbaren Rost bilden.

4. Stall nach Anspruch 1, dadurch gekennzeichnet, dass die zu seiner künstlichen Beleuchtung notwendigen Lichtquellen (17) am Stalldach (2) in einem Abstand (d) von der jeweils benachbarten Stallwand (1) angeordnet sind, der ein solches Mindestmass aufweist, dass das Legenest (11) gerade noch im Schatten des Scharrbodens (10) bleibt.

5. Stall nach Anspruch 1, dadurch gekennzeichnet, dass das Dach (2) ausser auf den Stallwänden (1) auch noch auf Stützen (9) ruht, die gleichzeitig auch als Tragelemente für den das obere Stockwerk bildenden Scharrboden (10) dienen.

## Claims

1. Coop for laying hens, with a scraping or scratching floor (10), a laying nest (11) for the eggs, with at least one feed belt (16) and at least one watering point (7), with perches (5) and with at least one excrement pit (8), characterized in that over part of its area the coop is constructed in two-storey form, the upper storey being formed by the scratching floor (10), whilst the lower storey has a floor (4), which is completely formed by a horizontal grating (4a) covering the underlying excrement pit (8), the feed belt (6), watering point (7) and laying nest (11) being located directly above said grating, whilst the laying nest is also positioned under the scratching floor in a central position with respect thereto.

2. Coop according to claim 1, characterized in that there is a connecting means (16) along which the laying hens can walk between the scratching floor (10) and the lower storey.

3. Coop according to claim 1, characterized in that the perches (5) are positioned directly above the grating (4a) covering the excrement pit (8) and are spaced in such a way from one another that they form a grid along which persons looking after the coop walk.

4. Coop according to claim 1, characterized in that the light sources (17) necessary for artificial lighting are arranged on the coop roof (2) at a distance (d) from the in each case adjacent coop wall (1), which has such a minimum dimension that the laying nest (11) just remains in the shadow of the scratching floor (10).

5. Coop according to claim 1, characterized in that apart from resting on the coop walls (1), roof (2) also rests on supports (9) which simultaneously act as support members for the scratching floor (10) forming the upper storey.

## Revendications

1. Poulailler pour poules pondeuses comportant une aire de grattage (10), un nid de ponte (11) pour la ponte des oeufs, au moins une bande transporteuse (6) amenant les aliments et au moins un abreuvoir (7), des perchoirs en forme de barres (5) et au moins une fosse à ordures (8), caractérisé en ce que, sur une partie de sa surface au sol, le poulailler est à deux étages, l'étage supérieur étant constitué par l'aire de grattage (10) tandis que l'étage inférieur comporte un plancher (4) qui est entièrement formé par une grille (4a) disposée horizontalement qui recouvre la fosse à ordures (8) sous-jacente, en ce que la bande transporteuse (6), l'abreuvoir (7) et le nid de ponte (11) se trouvent immédiatement au-dessus de cette grille et que, de plus, le nid de ponte se trouve, sous l'aire de grattage, dans une position centrale par rapport à celle-ci.

2. Poulailler selon la revendication 1, caractérisé en ce qu'il comporte, entre l'aire de grattage (10) et l'étage inférieur, un dispositif de liaison (16) sur lequel les poules pondeuses peuvent se déplacer.

3. Poulailler selon la revendication 1, caractérisé en ce que les perchoirs en forme de barres (6) sont placés immédiatement au-dessus de la grille (4a) qui recouvre la fosse à ordures (8) et sont séparés les uns des autres par une distance telle qu'ils constituent un réseau dans lequel peut circuler le personnel qui s'occupe du poulailler.

4. Poulailler selon la revendication 1, caractérisé en ce que les sources lumineuses (17) nécessaires à l'éclairage artificiel du poulailler sont fixées au toit (2) du poulailler à une distance (d) de la paroi latérale (1) correspondante qui est la plus petite distance pour laquelle le nid de ponte (11) reste encore dans l'ombre de l'aire de grattage (10).

5. Poulailler selon la revendication 1, caractérisé en ce que le toit (2) a comme support, en plus des murs du poulailler (1), des montants (9) qui servent en même temps d'éléments porteurs pour l'aire de grattage (10) qui constitue le premier étage.

FIG. 1

FIG. 2

1